# DEMANDE DE BREVET EUROPEEN

(11) **EP 1 115 226 A1**
(43) Date de publication de la demande: **11.07.2001**
(21) Numéro de dépôt: 00403520.0
(22) Date de dépôt: 14.12.2000
(51) Int. Cl.: H04L 12/24, H04L 12/16, H04Q 3/66, H04Q 3/62

(54) **Procédé de gestion de maintien des possibilités de communication au sein d'un réseau privé**

(30) Priorité: 06.01.2000 FR 0000119
(71) Demandeur: ALCATEL, 75008 Paris (FR)
(72) Inventeur: Phan, Cao Thanh, 92500 Reuil Malmaison (FR); Villatte, Karine, 92250 La Garenne Colombes (FR)
(74) Mandataire: Sciaux, Edmond

(57) **Abrégé**

Ce procédé permet de continuer à disposer d'un ensemble de services au sein d'un réseau privé de communication (R0) même en cas de partition (R1 ;R2) de ce réseau. Il met en oeuvre des moyens de secours procurant des accès dynamiques (AD_{3,4}) préalablement définis par l'utilisateur du réseau. Les accès dynamiques assurent le transfert des signaux de signalisation. L'acheminement des communications s'effectue selon un mode de routage statique et prédéterminé, qui impose un chemin prédéterminé avant tout disfonctionnement, ce qui permet une plus grande rapidité de réaction du réseau lorsqu'il détecte un disfonctionnement.

## Description

L'invention concerne un procédé de gestion de maintien des possibilités de communication au sein d'un réseau privé de communication.

Plus particulièrement, l'invention concerne un procédé qui permet de continuer à disposer d'un ensemble de services au sein d'un réseau privé de communication, ledit réseau permettant à plusieurs équipements de communiquer entre eux via des liaisons bidirectionnelles de communication, même en cas de rupture d'une liaison dédiée qui entraîne une partition du réseau de communication considéré.

Le cadre général de l'invention est celui d'un réseau d'équipements composés notamment de noeuds représentant par exemple des autocommutateurs privés reliés entre eux par des artères bidirectionnelles de communication, le dit réseau étant raccordé à un réseau public à commutation de circuit.

D'une manière générale, une artère entre deux terminaux définit un ensemble d'accès à ces terminaux. Ces accès sont des lignes de transmission louées ou achetées par les utilisateurs auprès d'un service public. Physiquement, les accès se décomposent en plusieurs canaux. Ainsi, par exemple, les accès de type T0, dits accès de base, supportent deux canaux de transmission de données, dits canaux B, qui ont un débit de 64 kilobits par seconde, et un canal de signalisation, dit canal D, dont le débit est de 16 kilobits par seconde. Les accès de types T2, dits accès primaire, supportent 30 canaux B et un canal D, l'ensemble de ces canaux ayant un débit de 64 kilobits par seconde.

Tous ces accès sont dites polyvalents dans le sens ou chacun d'entre eux est apte, dans la limite de son débit propre, à fournir l'ensemble des services offerts par le réseau. D'une façon générale, le canal B est un canal qui peut être utilisé pour transporter tout type d'informations, qu'il s'agisse de trames de données ou de la voix. Le canal D est un canal apte à transporter des messages de signalisation propres à différents services. Le canal D est essentiellement utilisé pour établir une communication sur un des canaux qui sont dans l'accès lui-même. Il véhicule par exemple les informations, envoyées sous forme de message d'établissement, par un terminal qui effectue une demande d'établissement de communication avec un autre terminal. Ces informations peuvent être un numéro de canal B, l'adresse du destinataire, le type de service ...

Les différents canaux de signalisation ou de données sont loués à un service public par l'utilisateur. Le canal de signalisation, ou canal D, est établi en permanence entre les deux terminaux qui se situent à ses extrémités. L'utilisateur paie donc en permanence l'utilisation de ce canal. Par contre, le coût des canaux de données, ou canaux B, dépend du type d'accès qui lui sont associés. Le coût de ces canaux peut se composer d'un abonnement de montant fixe, et d'un montant qui dépend du temps de communication et de la distance de la communication. L'utilisateur d'un réseau du type de celui dans lequel intervient le procédé selon l'invention limite donc, par soucis d'économie, le nombre de canaux B qu'il loue et l'utilisation qu'il en fait. Aussi, peut-il utiliser les canaux D pour transmettre certaines données. Ces données ne sont pas des données du monde téléphonique, mais plutôt des paquets de données qui circulent par exemple entre deux ordinateurs ou terminaux. Le coût d'utilisation du canal D ne dépendant pas du volume d'information échangé sur ce canal, l'utilisateur exploite ce dernier au maximum de ces possibilités.

Ainsi, le canal de signalisation permet de véhiculer des signaux numériques qui permettent de disposer de nombreux services au sein du réseau considéré. Ces services peuvent par exemple être des options proposées à l'utilisateur, telles que des transferts automatiques d'appel d'un terminal du réseau à un autre terminal du réseau, des rappels automatiques, des interceptions d'appel ...

Les canaux de signalisation sont également très utilisés dans les procédés de distribution d'appel. Les procédés de distribution d'appel ont pour fonction essentielle de mettre en relation un utilisateur extérieur, qui souhaite bénéficier d'un service précis ou qui désire obtenir un renseignement particulier, avec un opérateur particulier qui possède les compétences adéquates pour répondre au désir de l'utilisateur. Dans les agencements de distribution d'appel, toutes les informations relatives à un routage dynamique circulent via les canaux de signalisation. Le routage dynamique permet d'analyser instantanément l'état de l'agencement de distribution d'appel ainsi que les ressources disponibles à chaque instant ; il permet ainsi de calculer le meilleur chemin possible que doit suivre la communication pour aboutir le plus rapidement possible sur un agent présentant les compétences adéquates.

L'utilisation des canaux de signalisation permet également de mettre en oeuvre des réseaux privés virtuels ou VPN (Virtual Private Network dans la littérature anglaise). Dans ce type de réseau, de nombreux signaux de signalisation sont spécifiques au réseau et à ses besoins. Les signaux de signalisation, qui sont transmis par le canal de signalisation, permettent de disposer de nombreux services répondant à la demande de l'utilisateur du réseau.

Par contre, dans les réseaux VPN, un réseau de télécommunication public continue à être utilisé pour la transmission des informations autres que les informations de signalisation. Ainsi, des paquets de données numériques, des signaux véhiculant la voix ... sont transmis via le réseau de télécommunication public. Des unités électroniques de corrélation permettent alors de récupérer les données transmissent via le réseau de télécommunication public et de les faire correspondre aux signaux de signalisation qui ont été transmis via le canal de signalisation.

Cependant, certains dysfonctionnement peuvent intervenir et empêcher les signaux de signalisation de transiter via le canal de signalisation habituel. Ces dysfonctionnements peuvent être liés à l'accès, à l'artère elle-même ou encore à une anomalie au niveau d'un des noeuds du réseau.

Dans le cas de figure où un canal de signalisation, qui existe entre deux noeuds du réseau dans un mode de fonctionnement normal, n'est plus utilisable, le principe du routage dynamique peut permettre de définir un nouvel acheminement des signaux de signalisation. Ce nouvel acheminement permet de continuer à exploiter l'ensemble des services sur l'ensemble du réseau.

Cependant, il se peut que certains dysfonctionnement entraînent une partition du réseau. Par partition du réseau, on désigne le fait que le réseau initial est scindé en deux ou plusieurs parties qui ne peuvent plus communiquer entre elles. Une partition d'un réseau privé de communication limite alors les services que pouvait proposer le réseau dans son mode de fonctionnement normal. Par exemple, dans le cas d'un agencement de distribution d'appels, certains opérateurs ne sont plus joignables ; leur charge de travail est en conséquence nettement réduite, alors que la charge de travail des opérateurs qui restent joignables est rapidement excessive. Il en résulte une moins grande vitesse dans la mise en relation entre l'utilisateur extérieur et l'opérateur, qui, par ailleurs, est peut-être moins compétent que l'opérateur auquel aurait abouti l'appel dans un mode de fonctionnement normal. L'appréciation de l'utilisateur extérieur quant aux services qu'on lui propose est alors forcément moins bonne.

Afin de résoudre les problèmes de partition de réseau privé, l'état de la technique propose des solutions dites de redondance qui consistent, par mesure de prévention, à doubler systématiquement les canaux de signalisation existant. ll existe alors pour chaque canal de signalisation mis en service, un canal de signalisation identique dont l'unique rôle est de suppléer le premier canal de signalisation en cas de dysfonctionnement de ce dernier. Cependant, comme on l'a vu précédemment, le coût d'un canal de signalisation ne dépend pas du volume d'information échangé sur ce canal ; sa seule location est coûteuse. En conséquence, les solutions dites de redondance sont excessivement coûteuses et ne sont pas forcément satisfaisantes dans le cas où le dysfonctionnement du réseau ne provient plus d'une rupture d'artère mais d'une panne d'un des terminaux.

Le procédé selon l'invention permet de pallier l'ensemble des problèmes et des inconvénients qui viennent d'être exposés. La mise en oeuvre du procédé selon l'invention permet en outre de disposer d'un réseau privé très fiable dans le sens où il assure une continuité des services proposés par le réseau dans son mode de fonctionnement normal, même dans les situations qui auraient provoqué les partitions du réseau dans l'état de la technique. La mise en oeuvre du procédé selon l'invention permet ainsi, par exemple, de satisfaire en permanence les utilisateurs d'un réseau de distribution d'appels. Sa mise en oeuvre est donc particulièrement intéressante pour certaines entreprises dont l'appréciation par les clients réside essentiellement dans la qualité des services que peuvent proposer l'agencement de distribution d'appels dont dispose l'entreprise.

Pour atteindre ces objectifs, l'invention propose en outre l'utilisation de moyens de secours qui sont mis en oeuvre lorsqu'une partition du réseau est détectée. Ces moyens de secours permettent de continuer à rendre possible la transmission des signaux de signalisation entre deux noeuds quelconques du réseau, et plus particulièrement entre deux noeuds appartenant à des parties devenues disjointes suite à la partition du réseau. Ces moyens de secours se présentent sous la forme d'accès dynamiques qui sont mis en oeuvre à la demande, c'est à dire uniquement lorsqu'ils sont sollicités. L'utilisateur du réseau de communication a la possibilité de définir dans son réseau un ensemble de noeuds à partir desquels et vers lesquels les accès dynamiques pourront être établis.

Les accès dynamiques peuvent utiliser divers moyens de transmission, qui peuvent faire intervenir par exemple des modems, des liaisons Ethernet, ou encore un canal B d'un accès d'un faisceau de communication. D'une façon générale, tout support qui permet de transmettre des signaux numériques de signalisation peuvent être utilisés.

L'objet de l'invention est un procédé de maintien des possibilités de communication au sein d'un réseau privé de communication faisant intervenir notamment des noeuds de type autocommutateurs privés, les dits noeuds étant connexes comme étant reliés entre eux par des artères bidirectionnelles de communication de façon à ce qu'aucune partition du réseau n'existe dans un mode de fonctionnement normal, comportant les étapes consistant à :
- détecter un dysfonctionnement entraînant une partition du réseau ;
- mettre en oeuvre des moyens de secours qui procurent un ou plusieurs accès dynamiques pour assurer de nouveau la connexité de tous les noeuds du réseau, et maintenir ainsi un ensemble de services proposés par le réseau dans son mode de fonctionnement normal ;
**caractérisé** en ce qu'une fois les moyens de secours mis en oeuvre, il comporte l'étape supplémentaire consistant à transmettre les communications à travers le réseau selon un mode de routage statique et prédéterminé.

Ce mode de routage statique et prédéterminé définit un chemin d'accès unique entre un noeud émetteur et un noeud destinataire, le chemin d'accès unique étant mémorisé dans le noeud émetteur et dans le noeud destinataire.

De préférence, un ensemble de noeuds du réseau, à partir desquels les accès dynamiques sont disponibles, est défini préalablement à tout dysfonctionnement entraînant une partition du réseau par l'utilisateur du réseau. Selon un mode de mise en oeuvre préféré de l'invention, les accès dynamiques sont mis en oeuvre uniquement pour satisfaire une demande de communication entre deux noeuds rendus non connexes par la partition du réseau.

Par ailleurs, Le procédé selon l'invention peut également comporter une étape consistant à libérer les accès dynamiques dès que le dysfonctionnement entraînant la partition du réseau a cessé, et qu'une dernière communication supportée par les accès dynamiques est achevée. Cette particularité de l'invention permet notamment d'utiliser les accès dynamiques au minimum, et donc de privilégier l'utilisation des artères de communication du réseau dans son mode de fonctionnement normal tout en s'assurant que la dernière communication établie au moyen d'accès dynamique ne sera pas coupée. En effet, si la libération des accès dynamiques intervenait dès la fin du dysfonctionnement qui avait entraîné la partition du réseau, toutes les communications supportées à cet instant par les accès dynamiques, qui véhiculent notamment des références d'appel, seraient perdues.

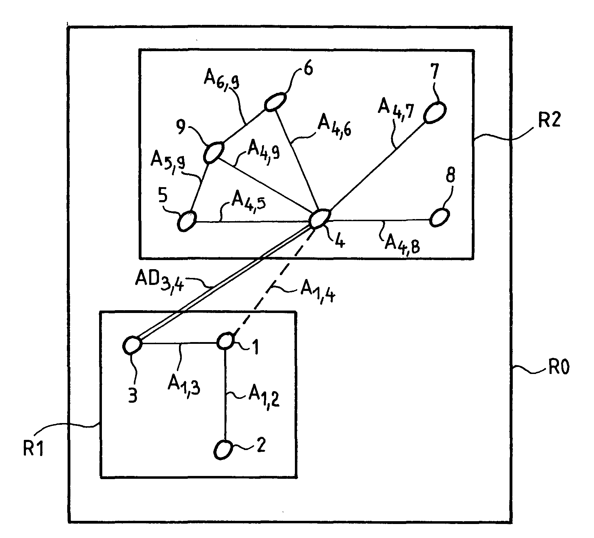

Les différents aspects et avantages de la présente invention seront mieux compris à la lecture de la suite de la description en référence à la figure unique qui n'est donnée qu'à titre indicatif et nullement limitatif.

La figure unique illustre une partition d'un réseau et la mise en oeuvre du procédé selon l'invention entraînée par cette partition du réseau.

Sur cette figure, un réseau privé de communication R0 est représenté. ll est composé de différents noeuds numérotés de 1 à 9. Ces noeuds sont connectés entre eux par des artères dont la notation A_{i,j} désigne l'artère joignant le terminal i et le terminal i. Le réseau R0 représenté dispose ainsi des artères A_{1,2,} A_{1,3,} A_{1,4,} A_{4,5,} A_{4,6,} A_{4,7,} A_{4,8,} A_{5,9} et A_{6,9}.

L'artère A_{1,4} est représentée en pointillé pour indiquer un dysfonctionnement au niveau ce cette artère. Le dysfonctionnement au niveau de l'artère A_{1,4} entraîne la partition du réseau R0 en une première partie de réseau R1 et une deuxième partie de réseau R2. Les deux parties du réseau R1 et R2 sont bien disjointes car aucun des noeuds de la première partie du réseau R1 ne peut communiquer directement, c'est à dire au moyen d'une artère disponible du réseau dans son mode de fonctionnement normal, avec un des noeuds de la deuxième partie du réseau R2.

Chaque noeud d'un réseau de communication tel que celui présenté à la figure unique connaît à chaque instant d'une part les différents noeuds qui lui sont adjacents, c'est à dire qui sont reliés à lui directement par une artère de communication, et d'autre part les différents noeuds qui lui sont connexes, c'est à dire qui lui sont accessibles via des artères de communication et différents noeuds. Le dysfonctionnement entraînant la partition du réseau R0 peut donc être immédiatement détectée par l'ensemble des noeuds de ces réseaux.

Lorsqu'une transmission de données doit être effectuée entre un des noeuds de la première partie du réseau R1 et un des noeuds de la deuxième partie du réseau R2, un accès dynamique AD_{3,4} est établi. Cet accès dynamique permet de véhiculer les signaux numériques de signalisation entre les deux parties R1 et R2 du réseau R0. La transmission des signaux de signalisation peut être effectuée au moyen de supports différents ; des modems assurant une conversion des signaux numériques et/ou analogiques peuvent par exemple avoir été disposés préalablement sur les noeuds 3 et 4. On peut également utiliser des liaisons de type liaison Ethernet, un canal B sur un accès d'un faisceau de communication, des accès de base ou encore des accès primaire qui peuvent être disponibles dans un réseau de communication public. Dans tous les cas de figure, les signaux de signalisation ne sont plus transmis uniquement à l'intérieur du réseau privé.

Les différentes données qui peuvent accompagner les signaux numériques de signalisation sont, pour leur part, transmises d'une partie du réseau à l'autre via des faisceaux de communication. Ces faisceaux de communication sont des liaisons assurant la connexion entre un réseau privé et le réseau de communication public.

L'accès dynamique AD_{3,4} est une liaison dite à signalisation dynamique qui a été créée au préalable par l'utilisateur du réseau. En fonction de ces besoins de ces priorités, l'utilisateur du réseau peut décider d'un ensemble de liaison à signalisation dynamique qui seront utilisées uniquement en cas de perturbation du fonctionnement normal du réseau.

Lorsqu'une telle partition du réseau est détectée, l'acheminement des communications s'effectue selon un mode de routage dit statique et prédéterminé. Le mode de routage dit statique s'oppose au mode de routage dit dynamique en ce sens qu'il impose à une communication le chemin à suivre pour aller d'un noeud à un autre. D'autre part, ce chemin est prédéterminé avant tout disfonctionnement, ce qui permet une plus grande rapidité de réaction du réseau lorsqu'il détecte un disfonctionnement.

Dans le cas d'une partition du réseau, un accès dynamique ayant été créé, les signaux de signalisation qui transitent entre les deux parties du réseau sont limités autant que possible. Ainsi, afin de pouvoir utiliser des accès dynamiques à débit réduit, un routage statique qui fait appel à un nombre de signaux de signalisation moins important qu'un routage dynamique, est utilisé.

Ainsi, par exemple, dans le cas d'une partition du réseau telle que celle représentée à l'unique figure, une communication qui doit être établie entre le noeud 2 et le noeud 6 peut être contrainte, par les données du routage statique, à passer successivement par les noeuds 1,3,4,5,9 et enfin 6 même si, a priori, un chemin plus court est disponible. Les informations relatives au routage statique sont contenues dans des mémoires accessibles pour chaque noeud intervenant dans un de ces routages statiques. Ainsi, dans l'exemple qui vient d'être exposé, le terminal 1 dispose de l'information lui indiquant que les signaux qu'il transmet au terminal 6 transiteront par les noeuds 3,4,5 et 9.

Dès le rétablissement de l'artère A_{1,4}, toute communication débutée après le rétablissement de l'artère A_{1,4} entre la première partie du réseau R1 et la deuxième partie du réseau R2 empruntera obligatoirement la liaison A_{1,4} rétablie. Les communications entre la première partie du réseau R1 et la deuxième partie du réseau R2 qui empruntaient l'artère dynamique AD_{3,4} sont maintenues jusqu'à leur fin. Lorsque plus aucune communication n'utilise l'artère dynamique AD_{3,4}, celle-ci est libérée; elle n'est plus disponible pour les futures communications tant que le réseau est en mode de fonctionnement normal, c'est à dire tant que le réseau ne subit pas de nouvelle partition.

Le procédé selon l'invention fait donc circuler autant que possible les signaux de signalisation par des artères établies en permanence pour libérer les accès établis dynamiquement, permettant ainsi de réduire les frais dus à l'utilisation des accès dynamiques.

## Revendications

1. Procédé de maintien des possibilités de communication au sein d'un réseau privé de communication (R0) faisant intervenir notamment des noeuds (1 à 9) de type autocommutateurs privés, les dits noeuds (1 à 9) étant connexes comme étant reliés entre eux par des artères bidirectionnelles de communication de façon à ce qu'aucune partition du réseau n'existe dans un mode de fonctionnement normal, comportant les étapes consistant à :
- détecter un dysfonctionnement entraînant une partition (R1 ;R2) du réseau ;
- mettre en oeuvre des moyens de secours qui procurent un ou plusieurs accès dynamiques (AD_{3,4}) pour assurer de nouveau la connexité de tous les noeuds (1 à 9) du réseau (R0), et maintenir ainsi un ensemble de services proposés par le réseau (R0) dans son mode de fonctionnement normal ;
**caractérisé** en ce qu'une fois les moyens de secours mis en oeuvre, il comporte l'étape supplémentaire consistant à transmettre les communications à travers le réseau (R0) selon un mode de routage statique et prédéterminé.

2. Procédé de maintien des possibilités de communication au sein d'un réseau privé de communication (R0) selon la revendication 1 caractérisé en ce qu'il comporte l'étape supplémentaire consistant à définir préalablement à tout dysfonctionnement entraînant une partition (R1 ;R2) du réseau, un ensemble de noeuds du réseau (3 ;4) à partir desquels les accès dynamiques sont disponibles.

3. Procédé de maintien des possibilités de communication au sein d'un réseau privé de communication (R0) selon l'une des revendications précédentes caractérisé en que les accès dynamiques (AD_{3,4}) sont mis en oeuvre uniquement pour satisfaire une demande de communication entre deux noeuds rendus non connexes par la partition (R1 ;R2) du réseau.

4. Procédé de maintien des possibilités de communication au sein d'un réseau privé de communication (R0) selon la revendication 1,
caractérisé en ce que le mode de routage statique définit un chemin d'accès unique entre un noeud émetteur et un noeud destinataire, le chemin d'accès unique étant mémorisé dans le noeud émetteur et dans le noeud destinataire.

5. Procédé de maintien des possibilités de communication au sein d'un réseau privé de communication (R0) selon l'une des revendications précédentes, caractérisé en ce qu'il comporte l'étape supplémentaire consistant à libérer les accès dynamiques (AD_{3,4}) dès que le dysfonctionnement entraînant la partition (R1 ;R2) du réseau (R0) a cessé et qu'une dernière communication supportée par les accès dynamiques (AD_{3,4}) est achevée.

6. Procédé de maintien des possibilités de communication au sein d'un réseau privé de communication (R0) selon l'une des revendications 2 à 5, caractérisé en ce que les moyens de secours comprennent des modems disposés sur les noeuds définis préalablement à tout dysfonctionnement et à partir desquels des accès dynamiques sont disponibles.

7. Procédé de maintien des possibilités de communication au sein d'un réseau privé de communication (R0) selon l'une des revendications précédentes caractérisé en ce que les moyens de secours font intervenir des liaisons Ethernet.

8. Procédé de maintien des possibilités de communication au sein d'un réseau privé de communication (R0) selon l'une des revendications précédentes caractérisé en ce que les moyens de secours font intervenir un canal B sur un accès d'un faisceau de communication.
